Europäisches Patentamt

(19) European Patent Office    (11) Numéro de publication: **0 039 641**
**B1**
Office européen des brevets

(12)                 FASCICULE DE BREVET EUROPEEN

(45) Date de publication du fascicule du brevet:    (51) Int. Cl.³: **F 16 D 55/224**
18.07.84

(21) Numéro de dépôt: **81400693.8**

(22) Date de dépôt: **30.04.81**

(54) Frein à action ponctuelle.

(30) Priorité: **06.05.80 FR 8010089**

(43) Date de publication de la demande:
**11.11.81 Bulletin 81/45**

(45) Mention de la délivrance du brevet:
**18.07.84 Bulletin 84/29**

(84) Etats contractants désignés:
**DE FR GB IT SE**

(56) Documents cités:
**DE - B - 1 217 223**
**FR - A - 1 470 500**
**FR - A - 2 024 737**
**US - A - 3 952 841**
**US - A - 4 030 576**

(73) Titulaire: **SOCIETE ANONYME D.B.A., Centre Paris Pleyel, F-93521 St-Denis Cédex 01 (FR)**

(72) Inventeur: **Meyer, Yves, 3 allée du Pré Fleuri, F-95150 Taverny (FR)**
Inventeur: **Carré, Jean-Jacques, 100 Avenue du Président Wilson, F-93100 Montreuil (FR)**

(74) Mandataire: **Poidatz, Emmanuel et al, Service Brevets Bendix 44 rue François 1er, F-75008 Paris (FR)**

BUNDESDRUCKEREI BERLIN

## Description

L'invention a pour objet un frein à action ponctuelle, notamment pour véhicule automobile.

L'invention concerne en particulier un frein à action ponctuelle c'est-à-dire à action localisée sur une faible portion corconférentielle de la surface de révolution d'un rotor, comportant au moins un élément de friction reçu en ancrage dans un support et susceptible de venir en engagement de friction sur une surface de révolution d'un rotor que l'on veut freiner, lors de la mise en œuvre d'un moteur de frein agissant axialement sur l'élément de friction, lequel a un profil complémentaire au profil de la surface de révolution du rotor.

Dans ce type de frein il est souvent demandé d'augmenter l'efficacité de freinage pour un encombrement radial donné ou bien de réduire le poids d'un tel frein pour une efficacité de freinage donnée et un encombrement radial donné. Ces demandes sont couramment associées à une demande d'accroissement de la durée de vie des éléments de friction. Ces demandes conduiront souvent à de nouvelles conceptions de freins qui peuvent être coûteuses, pour supporter soit des efforts de poussées des moteurs de frein plus grands, soit les mêmes efforts de poussée avec moins de matière.

Il a été proposé dans le document FR-A-2 024 737 de réaliser le rotor monobloc avec les pistes de frottement formant des V axiaux dont les pointes sont dirigées l'une vers l'autre. Au niveau de ces pointes sont formées des ailettes de refroidissement assurant la tenue de l'ensemble rotor monobloc. Bien que répondant au problème d'accroissement d'efficacité du fait de l'inclinaison des pistes de frottement, l'encombrement de l'ensemble reste considérable du fait de la nécessite de faire enjamber le rotor par l'étrier afin d'actionner les éléments de friction placés de part et d'autre de ce rotor.

L'invention a pour objet un frein à action ponctuelle du type indiqué ci-dessus dans lequel il est possible de réaliser un accroissement de l'efficacité de freinage et une réduction de poids, et, si nécessaire une augmentation de la durée de vie des éléments de friction.

Dans ce but, l'invention propose un frein à action ponctuelle comportant deux éléments de friction reçus en ancrage dans un support et susceptible de venir en engagement de friction sur des surfaces de révolution d'un rotor que l'on veut freiner, lors de la mise en œuvre de moyens d'actionnement constitués par un moteur de frein agissant axialement sur lesdits éléments de friction, lesquels ont un profil complémentaire au profil de la surface de révolution correspondante dudit rotor, lesdites surfaces de révolution formées dans des portions dudit rotor présentent en coupe axiale des profils ayant sensiblement la forme de V axiaux dont les bissectrices sont sensiblement confondues et sensiblement parallèles à l'axe du rotor, caractérisé en ce que ledit rotor est constitué de deux pièces de révolution formant entre elles un espace annulaire dans lequel s'étendent des surfaces cylindriques engendrées par la rotation autour de l'axe dudit rotor desdites bissectrices, lesdites deux pièces de révolution comportant des surfaces sensiblement tronconiques pour former lesdites surfaces de révolution, lesdites surfaces tronconiques étant portées par des portions desdites pièces de révolution, et en ce que ledit espace annulaire est traversé par des organes de liaison susceptible d'agir sur un des éléments de friction et par des bras pour recevoir en ancrage lesdits éléments de friction.

On décrira maintenant à titre non limitatif un mode de réalisation de l'invention en se référant aux figures annexées dans lesquelles:
— la fig. 1 est une vue de dessus d'un frein à action ponctuelle réalisé conformément à l'invention;
— la fig. 2 est une vue de face du frein à action ponctuelle de la fig. 1; et
— la fig. 3 est une vue en coupe suivant la ligne BB de la fig. 2 du frein à action ponctuelle de la fig. 1, montrant les phases d'assemblage du frein.

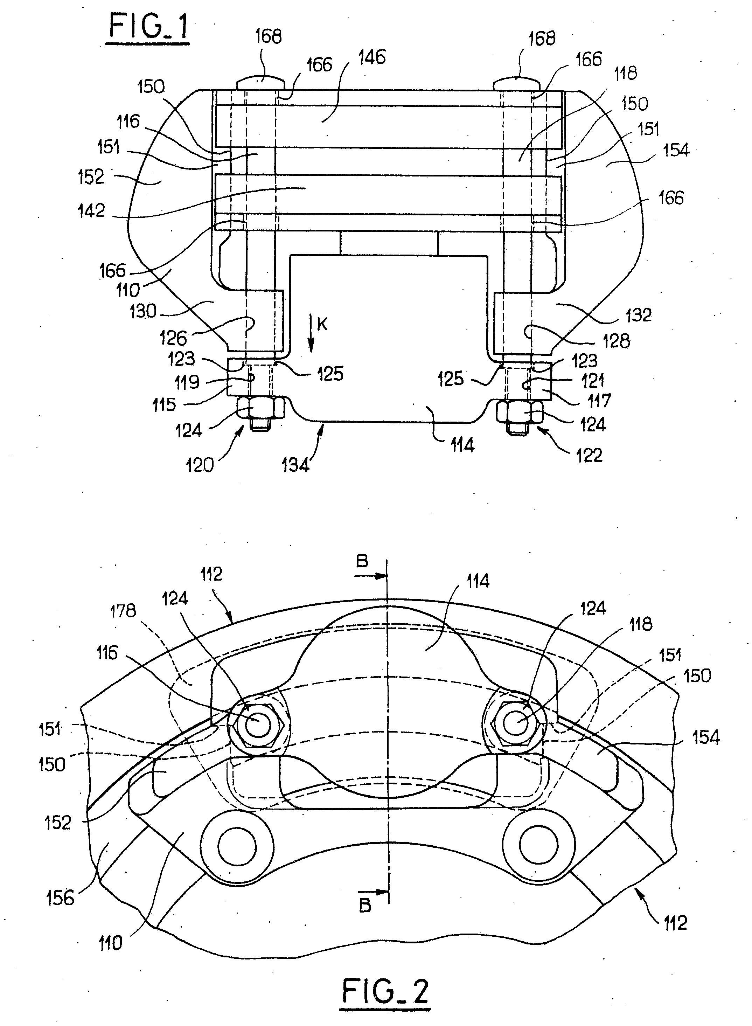

Le frein à action ponctuelle conforme à l'invention représenté sur les fig. 1 à 3, comporte un support fixe 110 prévu pour être associé à une partie fixe du véhicule (non représenté) et constitué dans le mode de réalisation représenté par une plaque disposée au voisinage d'un rotor 112 prévu pour être associé en rotation à une roue du véhicule (non représenté). Le support fixe 110 reçoit en coulissement une monture coulissante 114 au moyen d'organes de liaison qui dans le mode représenté sont deux axes de traction axiaux 116 et 118 sensiblement parallèles à l'axe du rotor et circonférentiellement espacés. La monture 114 comporte deux oreilles de fixation 115 et 117 pourvues d'orifices 119 et 121 destinées au passage des axes de traction 116 et 118. Les oreilles de fixation 115 et 117 portent un lamage 123 sur lequel s'appuient axialement dans le sens de la flèche K des zones élargies 125 des axes de traction 116 et 118. Ces deux axes 116 et 118 sont fixés à la monture 114 par des liaisons filetées 120 et 122 au moyen d'écrous hexagonaux 124 à l'aide d'une clé correspondante (non représentée). Les deux axes 116 et 118 sont reçus dans les alésages 126 et 128 des bras de coulissement 130 et 132 formés dans le support 110.

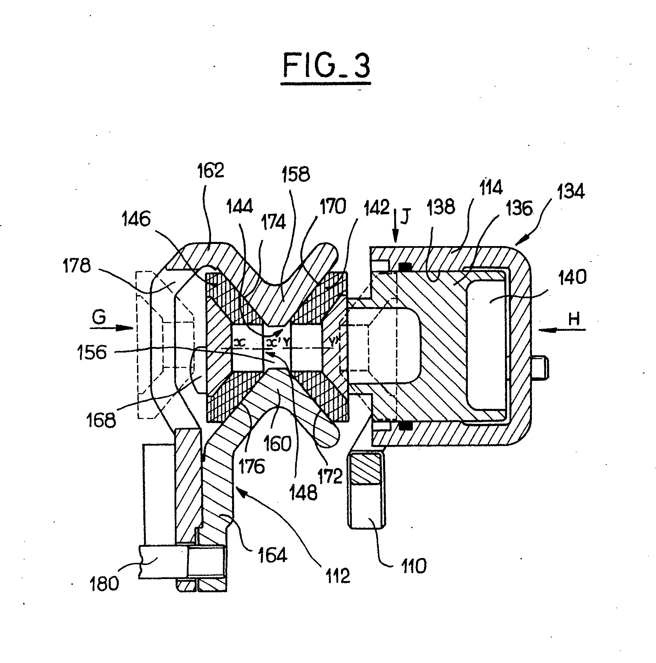

La monture 114 comporte des moyens d'actionnement 134 constitués par un moteur de frein hydraulique (voir fig. 3) comprenant un piston 136 monté coulissant dans un alésage 138 défini dans la monture 114 et sensible à la pression régnant dans une chambre de commande 140 susceptible d'être reliée à une source de pression telle que, par exemple, le maître-cylindre du véhicule (non représenté). Le piston 136 est disposé de façon à solliciter directement un premier élément de friction 142 contre une première sur face de révolution 144 du rotor 112 lorsque le fluide sous pression est admis dans la chambre 140. La monture 114 est susceptible de se déplacer par réaction entraînant le coulissement de cette dernière sur les bras de coulissement 130 et 132 afin de solliciter un second élément de friction 146 contre une deuxième surface de révolution 148 du rotor 112 au moyen des deux axes de traction 116 et 118. Comme le montre plus particulièrement la fig. 1 dans laquelle le rotor n'a pas été représenté pour faciliter la compréhension, l'élément de friction 142 est reçu en ancrage et en coulissement par les bords 150 et 151 des deux bras d'ancrage 152 et 154 circonférentiellement espacés du support fixe 110. Ces bras d'ancrage 152 et 154 traversent l'espace annulaire 156 défini entre les portions 158 et 160 des deux pièces de révolution 162 et 164 constituant le rotor 112 pour recevoir en ancrage et en coulissement le second élément de friction 146 d'une manière identique à celle utilisée pour le premier élément de friction 142. Les axes de traction 116 et 118 traversent les éléments de friction 142 et 146 au moyen d'orifices 166 partiqués lesdits éléments de friction, et l'espace annulaire 156. Le second élément de friction est susceptible d'être sollicité contre la deuxième surface de révolution 148 au moyen de portions épanouies 168 portées par les axes de traction 116 et 118.

Il apparaît en particulier sur la fig. 1 que les axes de traction 116 et 118 sont de section faible. En effet, lesdits axes de traction ne supportent pas d'efforts circonférentiels qui sont entièrement supportés par les ancrages sur les bras 152 et 154 du support 110.

La première surface de révolution 144 dont la section en coupe axiale présente le profil d'un V axial, c'est-à-dire dont la bissectrice yy' est parallèle à l'axe du rotor, est formée par la surface tronconique 170 portée par la portion 159 de la pièce de révolution 162 et par la surface tronconique 172 portée par la portion 160 de la pièce de révolution 164. L'élément de friction 142 présente en coupe axiale un profil sensiblement complémentaire au profil de la surface de révolution 144.

La deuxième surface de révolution 148 dont la section en coupe axiale présente également le profil d'un V axial, c'est-à-dire dont la bissectrice xx' est parallèle à l'axe du rotor, est formée par la surface tronconique 174 portée par la portion 158 de la pièce de révolution 162 et par la surface tronconique 176 portée par la portion 160 de la pièce de révolution 164. La portion 160 de la pièce de révolution 164 présente en coupe axiale un profil sensiblement de la forme d'un V radial, c'est-à-dire dont la bissectrice est perpendiculaire à l'axe du rotor et porte les surfaces tronconiques 170 et 174. Les pointes des deux V radiaux des portions 158 et 160 sont dirigées vers l'espace annulaire 156 qu'elles définissent entre elles.

Les surfaces tronconiques 170, 172, 174 et 176 ont des angles au sommet sensiblement identiques et sont sensiblement coaxiales.

La pièce de révolution 162 comporte au moins une ouverture 178 permettant le passage de l'élément de friction 146.

Les pièces de révolution 162 et 164 formant le rotor 112 sont solidaires entre elles grâce aux moyens de liaison 180 du rotor à une partie tournante du véhicule (non représentée).

L'opération de montage du frein sur le véhicule s'effectue de la manière suivante:

Le support fixe 110 est monté sur une partie fixe véhicule (non représentée). L'élément de friction 146 est mis en place suivant la flèche G (fig. 3) sur les bras 152 et 154 du support fixe 110, plus précisément sur les surfaces d'ancrage et de coulissement 150 et 151, à travers l'ouverture 178 de la pièce de révolution 162 du rotor 112. L'élément de friction 142 est mis en place suivant la flèche H (fig. 3) sur les bras 152 et 154, après avoir été introduit suivant la flèche J (fig. 3) entre les bras 130 et 132 d'une part et le rotor 112 d'autre part. Les axes de traction sont introduits suivant la flèche G dans les orifices 166 de l'élément de friction 146 puis en continuant le mouvement suivant la flèche G dans l'espace annulaire 156, dans les orifices 166 de l'élément de friction 142 et dans les alésages 126 et 128 des bras de coulissement 130 et 132 du support 110.

La monture 114 est montée sur les axes 116 et 118 suivant la flèche H au moyen des orifices 119 et 121 des oreilles 115 et 117 de la fig. 3, les lamages 123 venant en appui sur les zones élargies 125 des axes 116 et 118. Les écrous 124 sont serrés avec une clé correspondante (non représentée).

Le démontage du frein s'effectue dans l'ordre inverse des opérations qui viennent d'être décrites.

On démontre que plus l'angle des deux branches du V axial du profil en coupe axiale du rotor sera aigu moins l'effort axial à appliquer sur les éléments de friction sera élevé pour une même efficacité de freinage. Ce qui permet de réduire le poids du frein à action ponctuelle. Inversement pour un même poids du frein à action ponctuelle on peut obtenir une efficacité de freinage plus élevée.

On démontre également que pour une même surface des éléments de friction et dans un même encombrement radial, il est possible d'augmenter l'efficacité du freinage car la distance entre l'axe du rotor et l'axe du moteur de frein peut être augmentée d'une valeur dépendant de l'angle formé par les branches du V axial. Inversement sans augmenter la distance entre l'axe du rotor et l'axe du moteur de frein on peut augmenter la surface des éléments de friction et donc leur durée de vie dans un encombrement radial donné.

Il est évidemment possible de combiner l'augmentation de l'efficacité de freinage et la durée de vie des éléments de friction. Il apparît donc, à la lecture de ce qui précède, qu'un frein à action ponctuelle réalisé comme décrit précédemment et coopérant avec un rotor qui porte des surfaces de révolution dont la coupe axiale présente un profil de la forme d'un V axial permet de réduire le poids d'un tel frein, augmenter son efficacité de freinage et d'augmenter la durée de vie des éléments de friction.

**Revendications**

1. Frein à action ponctuelle comportant deux éléments de friction (142, 146) reçus en ancrage dans un support (110) et susceptible de venir en engagement de friction sur des surfaces de révolution d'un rotor (112) que l'on veut freiner, lors de la mise en œuvre de moyens d'actionnement constitués par un moteur de frein (134) agissant axialement sur lesdits éléments de friction (142, 146) lesquels ont un profil complémentaire au profil de la surface de révolution correspondante dudit rotor (112) qui est constitué de deux pièces de révolution (162, 164), lesdites surfaces de révolution (144, 148) formées dans des portions (158, 160) dudit rotor (112) présentant en coupe axiale des profils ayant sensiblement la forme de V axiaux dont les bissectrices (xx', yy') sont sensiblement confondues et sensiblement parallèles à l'axe du rotor (112), caractérisé en ce que les pièces de révolution (162, 164) constituant le rotor forment entre elles un espace annulaire (156) dans lequel s'étendent des surfaces cylindriques engendrées par la rotation autour de l'axe dudit rotor desdites bissectrices (xx', yy') comportent des surfaces sensiblement tronconiques (170, 172, 174, 176) pour former lesdites surfaces de révolution (144, 148), lesdites surfaces tronconiques (170, 172, 174, 176) étant portées par des portions (158, 160) desdites pièces de révolution (162, 164), et en ce que ledit espace annulaire (156) est traversé par des organes de liaison (116, 118) susceptibles d'agir sur un des éléments de friction (146) et par des bras (152, 154) pour recevoir en ancrage lesdits éléments de friction (142, 146).

2. Frein à action ponctuelle suivant la revendication 1, caractérisé en ce que lesdites pièces de révolution (162, 164) présentent en coupe axiale un profil ayant sensiblement la forme d'un V radial dont la bissectrice est sensiblement perpendiculaire à l'axe du rotor (112).

3. Frein à action ponctuelle selon la revendication 2, caractérisé en ce que lesdites portions (158, 160) de profil en V radial constituent des troncs de cône d'angles au sommet sensiblement identiques.

4. Frein à action ponctuelle selon l'une des revendications 1 à 3, caractérisé en ce que, de manière connue en soi, le rotor (112) est rigidement fixé à une pièce tournante du véhicule et en ce que ledit frein comporte une monture coulissant (114) sur un support fixe (110), munie dudit moteur de frein (134) agissant directement sur un des éléments de friction (142) et agissant sur l'autre élément de friction (146) par réaction au travers de ladite monture coulissante (114) au moyen desdits organes de liaison (116, 118).

5. Frein à action ponctuelle selon la revendication 4, caractérisé en ce que lesdits organes de liaison (116, 118) sont constitués par deux axes de traction fixés sur ladite monture coulissante (114).

6. Frein à action ponctuelle selon la revendication 5, caractérisé en ce que lesdits axes de traction (116, 118) traversent lesdits éléments de friction (142, 146) au travers d'orifices (166) assurant le guidage et le maintien desdits éléments de friction (142, 146).

7. Frein à action ponctuelle selon la revendication 6, caractérisé en ce que lesdits axes de traction (116, 118) présentent à une extrémité une portion épanouie (168) susceptible de coopérer avec un desdits éléments de friction (146) pour assurer l'engagement de friction dudit élément de friction (146).

8. Frein à action ponctuelle selon la revendication 7, caractérisé en ce que ledit rotor (112) comporte au moins une ouverture (178) permettant l'extraction axiale de l'élément de friction (146) susceptible d'être sollicité par lesdits axes de traction (116, 118).

9. Frein à action ponctuelle selon la revendication 8, caractérisé en ce que ladite monture coulissante (114) est susceptible d'être déplacée en éloignement du rotor (112) d'une valeur permettant l'extraction radiale de l'élément de friction (142) situé entre ledit moteur de frein (134) et ledit rotor (112) après démontage desdits axes de traction (116, 118).

10. Frein à action ponctuelle selon la revendication 9, comportant un support (110) muni de bras (152, 154) circonférentiellement espacés recevant en ancrage lesdits éléments de friction (142, 146) caractérisé en ce que ledit support (110) est fixe et est muni de deux bras de guidage et de maintien (130, 132) de ladite monture coulissante (114).

11. Frein à action ponctuelle selon la revendication 10, caractérisé en ce que le guidage et le maintien de ladite monture coulissante (114) est assuré par lesdits axes de traction (116, 118) reçus en coulissement dans lesdits bras de guidage et de maintien (130, 132) dudit support (110).

12. Frein à action ponctuelle selon la revendication 11, caractérisé en ce que ledit support est une portion de ladite monture coulissante et est constitué de bras circonférentiellement espacés recevant en ancrage lesdits éléments de friction.

13. Frein à action ponctuelle suivant la revendication 12, caractérisé en ce que ladite monture coulissante comporte deux bras de guidage et de maintien assurant le montage de ladite monture coulissante au moyen de deux colonnettes sur une partie fixe du véhicule.

**Patentansprüche**

1. Teilbelagbremse mit zwei Reibelementen (142, 146), die in einem Bremsträger (110) abgestützt sind und mit Drehflächen eines abzubremsenden Rotors (112) in Reibanlage gebracht werden können, und zwar bei Betrieb von Betätigungsmitteln in Form eines Bremsmotors (134), der axial auf die Reibelemente (142, 146) einwirkt, wobei die Reibelemente ein Profil haben, das komplementär zum Profil der entsprechenden Drehfläche des von zwei Drehkörpern (162, 164) gebildeten Rotors (112) ausgebildet ist und die besagten Drehflächen (144, 148) in Abschnitten (158, 160) des Rotors (112) im Axialschnitt Profile aufweisen, die im wesentlichen die Form von axialen V haben, deren Winkelhalbierende (xx', yy') im wesentlichen zusammenfallen und im wesentlichen parallel zur Achse des Rotors (112) verlaufen, dadurch gekennzeichnet, daß die den Rotor bildenden Drehkörper (162, 164) zwischen sich einen Ringraum (156) bilden, in dem sich zylindrische Flächen erstrecken, die durch Drehung der Winkelhalbierenden (xx', yy') um die Achse des Rotors erzeugt werden, und im wesentlichen kegelstumpfförmige Flächen (170, 172, 174, 176) zur Bildung der besagten Drehflächen (144, 148) aufweisen, wobei diese kegelstumpfförmigen Flächen (170, 172, 174, 176) von Abschnitten (158, 160) der Drehkörper (162, 164) getragen werden, und daß der Ringraum (156) von auf die Reibelemente (146) einwirkenden Verbindungselementen (116, 118) und von Armen (152, 154) zur Aufnahme der Reibelemente (142, 146) durchdrungen ist.

2. Teilbelagbremse nach Anspruch 1, dadurch gekennzeichnet, daß die Drehkörper (162, 164) im Axialschnitt ein Profil aufweisen, das im wesentlichen die Form eines radialen V hat, dessen Winkelhalbierende im wesentlichen senkrecht zur Achse des Rotors (112) verläuft.

3. Teilbelagbremse nach Anspruch 2, dadurch gekennzeichnet, daß die besagten Abschnitte (158, 160) mit einem Profil in Form eines radialen V Kegelstümpfe bilden, deren Kegelwinkel im wesentlichen identisch sind.

4. Teilbelagbremse nach einem der Ansprüche 1—3, dadurch gekennzeichnet, daß der Rotor (112) in an sich bekannter Weise an einem umlaufenden Teil des Fahrzeuges starr befestigt ist und daß die Bremse einen Schwimmkörper (114) aufweist, der auf einem festen Bremsträger (110) gleitet und mit dem Bremsmotor (134) versehen ist, der auf eines der Reibelemente (142) unmittelbar und auf das andere Reibelement (146) durch Reaktion über den Schwimmkörper (114) mittels der Verbindungselemente (116, 118) einwirkt.

5. Teilbelagbremse nach Anspruch 4, dadurch gekennzeichnet, daß die Verbindungselemente (116, 118) von zwei Zugbolzen gebildet sind, die an dem Schwimmkörper (114) befestigt sind.

6. Teilbelagbremse nach Anspruch 5, dadurch gekennzeichnet, daß die Zugbolzen (116, 118) die Reibelemente (142, 146) durch Löcher (166) durchdringen, die zur Führung und Halterung der Reibelemente (142, 146) dienen.

7. Teilbelagbremse nach Anspruch 6, dadurch gekennzeichnet, daß die Zugbolzen (116, 118) an einem Ende einen erweiterten Abschnitt (168) aufweisen, der mit einem der Reibelemente (146) zum Herbeiführen der Reibanlage dieses Reibelements (146) zusammenwirkt.

8. Teilbelagbremse nach Anspruch 7, dadurch gekennzeichnet, daß der Rotor (112) mindestens eine Öffnung (178) aufweist, die den axialen Ausbau desjenigen Reibelementes (146) ermöglicht, das von den Zugbolzen (116, 118) beaufschlagt wird.

9. Teilbelagbremse nach Anspruch 8, dadurch gekennzeichnet, daß der Schwimmkörper (114) von dem Rotor (112) um einen Betrag wegbewegbar ist, der einen radialen Ausbau des zwischen dem Bremsmotor (134) und dem Rotor (112) angeordneten Reibelementes (142) nach Entfernen der Zugbolzen (116, 118) ermöglicht.

10. Teilbelagbremse nach Anspruch 9 mit einem Bremsträger (110), der mit in Umfangsrichtung beabstandeten Armen (152, 154) zur Aufnahme der Reibelemente (142, 146) versehen ist, dadurch gekennzeichnet, daß der Bremsträger (110) fest ist und mit zwei Armen (130, 132) zur Führung und Halterung des Schwimmkörpers (114) versehen ist.

11. Teilbelagbremse nach Anspruch 10, dadurch gekennzeichnet, daß die Führung und Halterung des Schwimmkörpers (114) durch die Zugbolzen (116, 118) sichergestellt wird, die in den Armen (130, 132) des Bremsträgers (110) gleitend aufgenommen sind.

12. Teilbelagbremse nach Anspruch 11, dadurch gekennzeichnet, daß der Bremsträger ein Teil des Schwimmkörpers ist und von in Umfangsrichtung beabstandeten Armen zur Aufnahme der Reibelemente gebildet wird.

13. Teilbelagbremse nach Anspruch 12, dadurch gekennzeichnet, daß der Schwimmkörper zwei Führungs- und Halterungsarme aufweist, die die Befestigung des Schwimmkörpers mittels zweier Bolzen an einem festen Teil des Fahrzeugs sicherstellen.

**Claims**

1. A spot-type brake comprising a pair of friction elements (142, 146) mounted in a support (110) and adapted to frictionally engage rotational surfaces of a rotor (112) to be braked, upon operation of actuating means comprised by a brake motor (134) acting axially on said friction elements (142, 146), which have a profile complementary to the profile of the corresponding rotational surface of said rotor (112) comprised of a pair of rotational members (164, 164), said rotational surfaces (144, 148) formed in portions (158, 160) of said rotor (112) comprising, in an axial section, profiles having substantially the form of axial V's whose bisecting lines (xx', yy') substantially coincide and are substantially parallel to the axis of the rotor (112), characterized in that the rotational members (162, 164) constituting the rotor define between them an annular space (156) within which cylindrical surfaces generated by rotation of said bisecting lines (xx', yy') about the axis of said rotor extend, and comprise substantially conical surfaces (170, 172, 174, 176) for defining said rotational surfaces (144, 148), said conical surfaces (170, 172, 174, 176) being carried by portions (158, 160) of said rotational members (162, 164), and in that said annular space (156) is traversed by connecting members (116, 118) adapted to act upon one of the friction elements (146) and by arms (152, 154) for receiving said friction elements (142, 146).

2. A spot-type brake according to claim 1, characterized in that said rotational members (162, 164) comprise, in an axial section, a profile having substantially the form of a radial V whose bisecting line is substantially perpendicular to the axis of the rotor (112).

3. A spot-type brake according to claim 2, characterized in that said portions (150, 160) having a profile of a radial V define truncated cones having substantially identical angles at the vertex.

4. A spot-type brake according to any of claims 1—3, characterized in that, in a manner known per se, the rotor (112) is rigidly fixed to a rotating part of the vehicle and in that said brake comprises a mount (114) sliding upon a fixed support (110) and provided with said brake motor (134) acting directly upon one of the friction elements (142) and acting upon the other friction element (146) by reaction via said sliding mount (114) by means of said connecting members (116, 118).

5. A spot-type brake according to claim 4, characterized in that said connecting members (116, 118) are comprised of a pair of tie rods (116, 118) mounted on said sliding mount (114).

6. A spot-type brake according to claim 5, characterized in that said tie rods (116, 118) traverse said friction elements (142, 146) through orifices (166) assuring guidance and holding of said friction elements (142, 146).

7. A spot-type brake according to claim 6, characterized in that said tie rods (116, 118) have at one extremity an enlarged portion (168) adapted to co-operate with one of said friction elements (146) to assure frictional engagement of said friction element (146).

8. A spot-type brake according to claim 7, characterized in that said rotor (112) comprises at least one opening (178) permitting axial removal of the friction element (146) which is adapted to be acted upon by said tie rods (116, 118).

9. A spot-type brake according to claim 8, characterized in that said sliding mount (114) is adapted to be moved away from said rotor (112) a distance permitting axial removal of the friction element (142) disposed between said brake motor (134) and said rotor (112) after dismounting of said tie rods (116, 118).

10. A spot-type brake according to claim 9 comprising a support (110) provided with circumferentially spaced arms (152, 154) receiving said friction elements (142, 146) characterized in that said support (110) is fixed and is provided with a pair of arms (130, 132) for guiding and holding said sliding mount (114).

11. A spot-type brake according to claim 10, characterized in that the guiding and holding of said sliding mount (114) is assured by said tie rods (116, 118) slidingly received in said guiding and holding arms (130, 132) of said support (110).

12. A spot-type brake according to claim 11, characterized in that said support is a portion of said sliding mount and is comprised of circumferentially spaced arms receiving said friction elements.

13. A spot-type brake according to claim 12, characterized in that said sliding mount comprises a pair of guiding and holding arms assuring the mounting of said sliding mount by means of a pair of columns on a fixed portion of the vehicle.

## FIG. 1

## FIG. 2

# FIG_3